**Europäisches Patentamt**

**European Patent Office**

**Office européen des brevets**

(19)

(11) Publication number: **0 364 427 B1**

# (12) EUROPEAN PATENT SPECIFICATION

(45) Date of publication of patent specification :
**11.12.91 Bulletin 91/50**

(51) Int. Cl.⁵ : **E06B 1/70, F16B 1/00**

(21) Application number : **89850348.7**

(22) Date of filing : **12.10.89**

(54) A method and a device for the attachment of metal ledges or sills to the external surfaces of buildings.

(30) Priority : **13.10.88 SE 8803650**

(43) Date of publication of application :
**18.04.90 Bulletin 90/16**

(45) Publication of the grant of the patent :
**11.12.91 Bulletin 91/50**

(84) Designated Contracting States :
**AT BE CH DE FR GB IT LI NL**

(56) References cited :
**CH-A- 177 330**
**CH-A- 429 100**
**US-A- 2 887 734**

(73) Proprietor : **Forsbäck, Jimmy**
**Box 24**
**S-645 21 Strängnäs (SE)**

(72) Inventor : **Forsbäck, Jimmy**
**Box 24**
**S-645 21 Strängnäs (SE)**

(74) Representative : **Grennberg, Erik Bertil et al**
**H. ALBIHNS PATENTBYRA AB P.O. Box 3137**
**S-103 62 Stockholm (SE)**

EP 0 364 427 B1

## Description

The present invention relates to a method for attaching metal ledges or sills, for instance metal window-ledges, to the outer wall-surfaces of buildings, and also to a device for carrying out the method.

When fitting, for instance, metal window-sills to the wall of a building, no problem is encountered in securing the sills to a window frame, and at the ends. The outwardly projecting edge-end of the sill, however, is more difficult to secure and requires the use of a special fastener device. According to current Swedish building standards, the metal sill or ledge must be secured to wall mouldings of each 80 cm, as soon as a metal sill fitted to the external surface of a wall protrudes by 4 cm or more from the plane of said wall surface.

Such metal ledges or sills have earlier been secured with the aid of a double-folded piece of sheet-metal, with which a metal wire is lashed or tied in the sheet-metal eye thus formed, the legs of which eye are provided with holes. This semi-manufactured article is then attached on the building site, to the under-surface of the formed sill or ledge in a hole provided therein, by means of a pop-rivet inserted from above.

The other end of the metal wire is then securely tied to an attachment device inserted into the wall at a location beneath the ledge or sill, this attachment device having the form of a nail driven into the pug located between adjacent courses of brick in the case of a brick-built wall.

The drawbacks of this known method are that the double-folded sheet-metal element and the lashing or tying wire are difficult to manufacture other than by hand ; that the actual work of attaching the element is difficult ; and that the rivet must be inserted into the hole in the metal ledge or sill from above and the holes in the folded sheet-metal element subsequently fitted over the rivet, often by touch. Furthermore, since the wire does not lie centrally of the outside of the hole in the surface-mounted ledge or sill and since it is desired that the attachment wire shall lie edge-to-edge with the outer surface of the wall, difficulties can arise in fitting the sill or ledge in its final position.

An object of the invention is to provide a method and a device which will eliminate these drawbacks and enable such wall ledges or sills to be fitted in a simple and labour-saving manner in only a few working steps. This object is achieved in accordance with the invention by means of a method according to Claim 1 and by means of a fastener device according to Claim 2.

The invention will now be described with reference to a non-limiting, exemplifying embodiment thereof.

Figure 1 is a schematic cross-sectional view of a window sill fitted in accordance with the invention.

Figure 2 illustrates a fastener device prior to use.

Figure 3 illustrates part of a fitted fastener device.

Figure 4 illustrates an example of the construction of a fastener device.

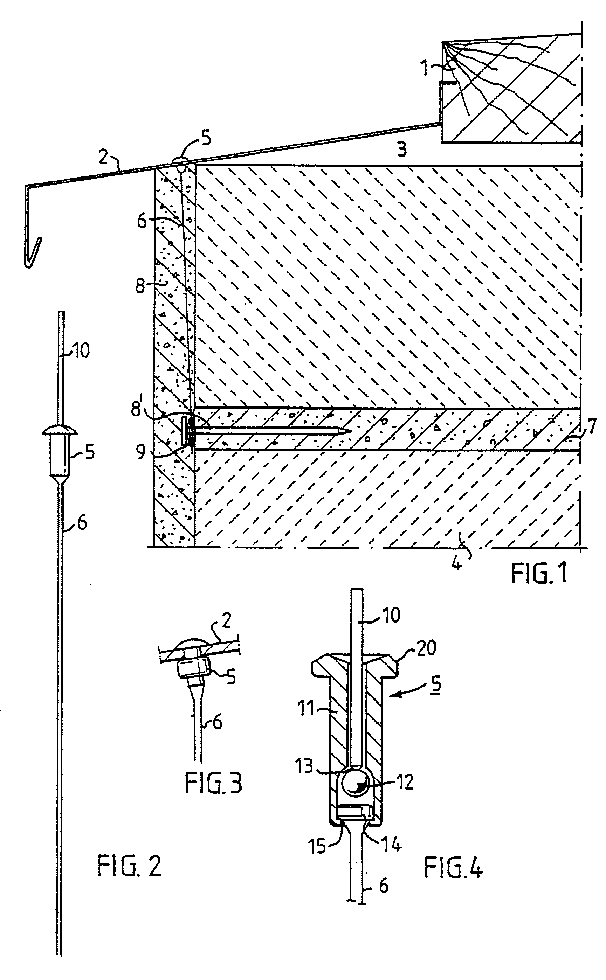

Fig. 1 is a sectional view of a window sill 2 fitted to a wooden window-frame 1 mounted in a brick wall. The inwardly lying edge of the window sill is bent, in a conventional manner, and knocked into the wooden-frame 1. The Figure illustrates two brick courses, comprising bricks 3 and 4 bonded by pug layers 7. A fastener device 5, 6 including a rivet-part 5 and a wire-part 6 is secured in a hole located in the window sill, with the wire-part drawn down to a nail 8' driven into the pug layer 7, said wire being secured by winding it around the nail 8'. Subsequent hereto, the wall is coated with a layer of mortar 8. (This feature is not characteristic of the invention, since the same attachment requirement prevails with brick walls which are not given a mortar facing, and also in walls made of wood, lightweight concrete, or any other wall material.)

It has been mentioned in the aforegoing that wall sills or ledges have earlier been secured with the aid of wires in a similar manner, and this method of attachment is, in many cases, the method prescribed. The invention relates to the manner in which the wire 6 can be attached to the undersurface of a sheet-metal object, such as the window sill 2.

Instead of using three components, namely a pop-rivet or a Chobert-type rivet, which is fitted by insertion from one side of the work and thereafter clinched by pulling a clinching mandrel down through the rivet with the aid of a special tool, a wire-holder in the form of bent sheet-metal lugs with holes formed in the legs of said lugs and a metal wire fastened to said lugs there is used only one single component, such as the component illustrated in Figure 2.

Fig. 2 illustrates a fastener element constructed in accordance with the invention. This fastener element comprises a rivet of the pop-rivet kind 5 and a rivet-clinching mandrel 10 or like element connected to said rivet, and a wire 6 secured to the rivet. In the simplest case, the rivet 5 may be a so-called pressure-tight pop-rivet, i.e. a rivet which has an imperforate bottom surface with the wire 6 welded securely to said bottom. The end of the wire is enlarged to form a head, prior to attachment of the wire. Fig. 3 is a schematic view illustrating the fastener device 5, 6 subsequent to its insertion through a hole in the metal sheet 2 and withdrawal of the clinching mandrel through the bore of the rivet, such as to enlarge the diameter of the bottom part of the rivet, so as to retain or clinch the rivet.

Fig. 4 is a detailed illustration of an example of how an inventive fastener device is constructed. The rivet-part 11 and the rivet-head 20 have passing therethrough a bore whose lower part is widened so as to form a shoulder. The rivet-clinching mandrel 10, provided with a spherical body 12, is inserted into the rivet from beneath against the shoulder and has a weakening 13 located above the spherical body. Consequently, when a downward force is exerted on the mandrel 10 with the head 20 of the rivet held, the material in the rivet-part will be deformed, so as to produce the effect illustrated in Fig. 3. The rivet-part 11, however, is open at the bottom thereof and the wire 6 and the head 14 attached thereto is held firmly within said rivet-part, as shown at 15, by deformation and/or welding.

The material from which the fastener device is made must be adapted to the material of the wall ledge or sill being secured, in view of the danger of galvanic corrosion. In the simplest case, when the metal sheet is galvanized, the fastener device may comprise galvanized iron or steel.

When the wall sheet is made of copper, the fastener device will also preferably be made of copper. Stainless material is preferred in many instances, since corrosion of the wire in the surrounding mortar can be overcome.

The method and device according to the invention are particularly labour-saving, and the fastener device can be fitted comfortably with the aid of a conventional pair of pop-rivet pliers, subsequent to fitting the rivet from only one side of the work, and without fitting problems since there is no need to make adjustments from the under-surface.

## Claims

1. A method for attaching metal ledges or sills to the outer surfaces of buildings, in which an inwardly turned edge of a wall-surface ledge (2) is attached to a wall surface or a frame (1) and of which wall ledge or sill a part thereof projects outwardly from the wall and the remainder of said sheet is placed against an edge, and in which method a first end of an elongated wire-element (6) is riveted to the undersurface of the metal ledge with the aid of a rivet passed through a hole formed in said metal ledge, and in which the other end of the elongated wire-element (6) is attached to a fastener (8) fastened in the wall at a location beneath the wall-surface sheet, characterized in that the first end of the elongated wire-element (6) is attached to a head-free end of a pop-rivet or blind rivet (5) to form a unitary fastener device, and the other end of the elongated wire-element is inserted from top into the hole and is accompanied by the end of the pop-rivet distal from said head-end thereof, until the head of the rivet lies against the metal-ledge from above, whereafter the rivet-clinching mandrel (10) is withdrawn from the pop-rivet with the aid of a pair of pop-rivet pliers.

2. A fastener device for fastening metal sheet to the outer surface of a building, characterized by an elongated wire-element (6) which is firmly connected at one end thereof to the narrow end of a blind-rivet or pop-rivet (5).

3. A fastener device according to Claim 2, characterized in that the pop-rivet (5) is of the pressure-tight type having a bottom in which said one end of the elongated wire-element (6) is fastened.

4. A fastener device according to Claim 2, characterized in that the pop-rivet has at its narrow end a tubular part into which said one end of the elongated wire-element (6) is inserted and secured by deformation and/or welding.

5. A fastener device according to any one of Claims 2-4, characterized in that the end of the elongated wire-element fastened to the pop-rivet is thickened.

## Patentansprüche

1. Verfahren zur Befestigung von Gesimsblechen oder metallischen Fensterbänken an der Außenoberfläche von Gebäuden, bei dem ein nach innen gerichteter Rand eines die Wandoberfläche abdeckenden Gesimsbleches (2) an einer Wandoberfläche oder einem Rahmen (1) befestigt wird, welches Gesimsblech bzw. welche Fensterbank oder ein Teil von ihm bzw. ihr nach außen von der Wand absteht und der Rest des Bleches bzw. der Bank an einem Rand der Mauer angebracht wird und bei welchem Verfahren ein erstes Ende eines langgestreckten Drahtelementes (6) an der Unterseite der metallischen Fensterbank mit Hilfe eines durch ein in ihr ausgeformtes Loch eingeführten Nietes befestigt und das andere Ende des langgestreckten Drahtelementes (6) an einem Befestigungselement (8) angebracht wird, das in der Wand an einer unterhalb des die Wandoberfläche abdeckenden Bleches liegenden Stelle befestigt ist, dadurch gekennzeichnet, daß das erste Ende des langgestreckten Drahtelementes (6) am kopffreien Ende eines Dornnietes oder Blindnietes (5) befestigt wird, um eine zusammenhängende Befestigungsvorrichtung zu bilden und das andere Ende des langgestreckten Drahtelementes von oben in das Loch eingeführt und von dem vom Kopfende abweisenden Ende des Dornnietes begleitet wird, bis der Kopf des Nietes von oben am Gesimsblech bzw. der metallischen Fensterbank anliegt, wonach der Nietenaufweitungsdorn (10) aus der Dornniete mit Hilfe einer Dornnietzange gezogen wird.

2. Vorrichtung zum Befestigen eines Metallbleches an der Außenoberfläche eines Gebäudes, gekennzeichnet durch ein langgestrecktes Drahtelement (6), das an dem einen Ende mit dem dünneren Ende eines Dornnietes oder Blindnietes (5) fest verbunden ist.

3. Befestigungsvorrichtung nach Anspruch 2, dadurch gekennzeichnet, daß der Dornniet (5) ein Niet vom druckfesten Typ ist, der einen Boden aufweist, in dem das eine Ende des langgestreckten Drahtelementes befestigt ist.

4. Befestigungsvorrichtung nach Anspruch 2, dadurch gekennzeichnet, daß der Dornniet an seinem dünneren Ende einen rohrförmigen Abschnitt aufweist, in den das eine Ende des langgestreckten Drahtelementes (6) eingesetzt und durch Deformierung und/oder Schweißung befestigt ist.

5. Befestigungsvorrichtung nach einem der Ansprüche 2 bis 4, dadurch gekennzeichnet, daß das am Dornniet befestigte Ende des langgestreckten Drahtelementes verdickt ist.

## Revendications

1. Procédé pour fixer des moulures ou des seuils métalliques aux surfaces extérieures de bâtiments, dans lequel un bord incurvé vers l'intérieur d'une moulure (2) de surface d'un mur est fixé à une surface du mur ou à un cadre (1), une partie de la moulure ou du seuil fixé au mur faisant saillie vers l'extérieur du mur et le reste de ladite feuille étant placé contre un bord, et dans lequel une première extrémité d'un élément en forme de fil allongé (6) est rivetée à la surface inférieure de la moulure métallique à l'aide d'un rivet traversant un trou formé dans ladite moulure métallique, l'autre extrémité de l'élément en forme de fil allongé (6) étant reliée à une attache (8) fixée dans le mur en un point situé sous la feuille de surface du mur, caractérisé en ce que la première extrémité de l'élément en forme de fil allongé (6) est fixée à une extrémité sans tête d'un rivet à tête bombée ou d'un rivet aveugle (5) pour former un dispositif de fixation unitaire, et en ce que l'autre extrémité de l'élément en forme de fil allongé est insérée par le haut dans le trou et est accompagnée par l'extrémité du rivet à tête bombée qui est opposée à la tête, jusqu'à ce que la tête du rivet vienne buter sur la moulure métallique par le haut, après quoi le mandrin de rivetage (10) est retiré du rivet à tête bombée à l'aide d'une pince pour rivets à tête bombée.

2. Dispositif de fixation pour fixer une feuille de métal à la surface extérieure d'un bâtiment, caractérisé par un élément en forme de fil allongé (6) qui est fermement lié par l'une de ses extrémités à l'extrémité étroite d'un rivet aveugle ou d'un rivet à tête bombée (5).

3. Dispositif de fixation selon la revendication 2, caractérisé en ce que le rivet à tête bombée (5) est du type étanche à la pression, comportant une base dans laquelle est fixée ladite extrémité de l'élément en forme de fil allongé (6).

4. Dispositif de fixation selon la revendication 2, caractérisé en ce que le rivet à tête bombée comporte, à son extrémité étroite, une partie tubulaire dans laquelle ladite extrémité de l'élément en forme de fil allongé (6) est insérée et fixée par déformation et/ou soudage.

5. Dispositif de fixation selon l'une quelconque des revendications 2-4, caractérisé en ce que l'extrémité de l'élément en forme de fil allongé fixée au rivet à tête bombée est élargie.

FIG.1

FIG. 2

FIG.3

FIG.4